(19) Europäisches Patentamt / European Patent Office / Office européen des brevets

(11) **EP 3 944 370 B1**

(12) **EUROPEAN PATENT SPECIFICATION**

(45) Date of publication and mention of the grant of the patent:
**03.05.2023 Bulletin 2023/18**

(21) Application number: **20840165.3**

(22) Date of filing: **14.07.2020**

(51) International Patent Classification (IPC):
*H01M 4/36* (2006.01)  *H01M 4/62* (2006.01)
*H01M 4/525* (2010.01)  *H01M 4/505* (2010.01)
*H01M 10/052* (2010.01)  *C08J 3/20* (2006.01)
*C08K 3/22* (2006.01)  *C08L 79/08* (2006.01)
*H01M 4/04* (2006.01)  *H01M 4/131* (2010.01)
*H01M 4/1315* (2010.01)  *H01M 4/139* (2010.01)

(52) Cooperative Patent Classification (CPC):
**C09D 179/08; C08G 73/10; C08L 79/08;
H01M 4/0471; H01M 4/1391; H01M 4/366;
H01M 4/525; H01M 4/62;** H01M 4/131;
H01M 10/054; H01M 2004/028; Y02E 60/10

(86) International application number:
**PCT/KR2020/009261**

(87) International publication number:
**WO 2021/010730 (21.01.2021 Gazette 2021/03)**

(54) **POSITIVE ELECTRODE MATERIAL, AND POSITIVE ELECTRODE FOR LITHIUM SECONDARY BATTERY AND LITHIUM SECONDARY BATTERY WHICH INCLUDE THE SAME**

POSITIVELEKTRODENMATERIAL, POSITIVELEKTRODE FÜR LITHIUM-SEKUNDÄRBATTERIE UND DIESE ENTHALTENDE LITHIUM-SEKUNDÄRBATTERIE

MATÉRIAU D'ÉLECTRODE POSITIVE, ET ÉLECTRODE POSITIVE POUR BATTERIE SECONDAIRE AU LITHIUM ET BATTERIE SECONDAIRE AU LITHIUM LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.07.2019 KR 20190085364**

(43) Date of publication of application:
**26.01.2022 Bulletin 2022/04**

(73) Proprietor: **LG CHEM, LTD.
Yeongdeungpo-gu,
Seoul 07336 (KR)**

(72) Inventors:
• **LIM, Jung Ho**
  **Daejeon 34122 (KR)**
• **PARK, Hang Ah**
  **Daejeon 34122 (KR)**
• **KIM, Kyung Oh**
  **Daejeon 34122 (KR)**
• **LEE, Kang Hyeon**
  **Daejeon 34122 (KR)**
• **KIM, Jong Pil**
  **Daejeon 34122 (KR)**

(74) Representative: **Hoffmann Eitle
Patent- und Rechtsanwälte PartmbB
Arabellastraße 30
81925 München (DE)**

(56) References cited:
KR-A- 20100 081 950    KR-A- 20120 028 622
KR-A- 20170 060 515    KR-A- 20180 017 724
KR-B1- 101 646 703

**Description**

## TECHNICAL FIELD

The present invention relates to a positive electrode material, and a positive electrode for a lithium secondary battery and a lithium secondary battery which include the same, and particularly, to a positive electrode material in which a coating layer including nano-sized polymer particles is formed on a surface of a positive electrode active material, and a positive electrode for a lithium secondary battery and a lithium secondary battery which include the same.

## BACKGROUND ART

Lithium secondary batteries, as small, lightweight, and large-capacity batteries, have been widely used as power sources for portable devices since their appearance in 1991. Recently, with the rapid development of electronics, telecommunications, and computer industries, camcorders, mobile phones, and notebook PCs have emerged and have been remarkably developed, and demand for the lithium secondary batteries as power sources to drive these portable electronic information and communication devices is increasing day by day.

However, the lithium secondary battery has a limitation in that its lifetime rapidly decreases as it is repeatedly charged and discharged. This degradation of life characteristics is due to a side reaction between a positive electrode and an electrolyte solution, and this phenomenon may become more serious under high voltage and high temperature conditions. Thus, it is necessary to develop a secondary battery for high voltage, and, for this purpose, a technique for controlling a side reaction between a positive electrode active material and an electrolyte solution or an electrode interfacial reaction is very important.

In order to address this limitation, a technique for reducing the side reaction with the electrolyte solution by suppressing a contact between the positive electrode active material and the electrolyte solution by coating a metal oxide, such as $Al_2O_3$, $ZrO_2$, and $AlPO_4$, on a surface of the positive electrode active material has been proposed.

However, since a coating layer formed by using the metal oxide is an ion-insulating layer in which lithium ions are difficult to move, there is a limitation in that lithium ion conductivity is reduced.

After preparing a polymer solution by dissolving a polyamic acid in a solvent, Korean Patent No. 1105342 discloses a technique for forming a film-type polyimide coating layer on a surface of a positive electrode active material by dispersing the positive electrode active material in the polymer solution, removing the solvent, and performing a heat treatment.

In a case in which the polyimide coating layer is formed by the above-described method, there is an advantage in that polyimide may form a thin coating layer to prevent a contact between the positive electrode active material and the electrolyte solution. However, in a case in which the film-type coating layer is formed on the surface of the positive electrode active material, since the lithium ion conductivity is reduced, resistance may be increased and capacity may be decreased. Also, the above method uses a wet coating method using the solution, wherein layer separation may occur in the polymer solution that is used for wet coating and processability may be reduced, for example, separate device and process are required for the coating.

Patent Document 2 describes a positive electrode active material comprising polyimide for a lithium-sulfur battery, and more particularly, to a positive electrode active material in which a composite of polyimide and a carbon-based secondary particle is combined with sulfur particles, a manufacturing method thereof, and a lithium-sulfur battery including the same.

<Prior Art Document>

(Patent Document 1) Korean Patent No. 10-1105342
(Patent Document 2) Korean Patent Appl. 2018-0017724

## DISCLOSURE OF THE INVENTION

## TECHNICAL PROBLEM

An aspect of the present invention provides a positive electrode material in which life characteristics and stability at high-temperature conditions are excellent by suppressing a side reaction between a positive electrode active material and an electrolyte solution while minimizing degradation of resistance characteristics and capacity characteristics, and a positive electrode for a lithium secondary battery and a lithium secondary battery which include the same.

## TECHNICAL SOLUTION

According to an aspect of the present invention, there is provided a positive electrode material which includes a positive electrode active material; and a coating layer formed on a surface of the positive electrode active material, wherein the coating layer has a form in which polyimide is dispersed and distributed in an island shape, and wherein a formation area of the coating layer is in a range of 2% to 80% based on a total surface area of the positive electrode active material.

According to another aspect of the present invention, there is provided a method of preparing a positive electrode material which includes: preparing polyamic acid nanopowder having an average particle diameter ($D_{50}$) of 1 um or less; attaching the polyamic acid powder to a positive electrode active material by dry mixing the polyamic acid nanopowder and the positive electrode active material; and heat treating the positive electrode active material having the polyamic acid nanopowder attached thereto to convert the polyamic acid powder to polyimide.

According to another aspect of the present invention, there is provided a positive electrode for a lithium secondary battery, which includes the positive electrode material according to the present invention, and a lithium secondary battery including the positive electrode.

## ADVANTAGEOUS EFFECTS

Since a positive electrode material of the present invention includes a coating layer in which polyimide is dispersed and distributed in an island shape, it may prevent a contact between an electrolyte solution and a surface of a positive electrode active material while minimizing decreases in lithium ion conductivity and electrical conductivity by the coating layer.

In a method of preparing a positive electrode material according to the present invention, since nano-sized polyamic acid particles are used, a uniform coating layer may be formed even when dry coating is used. Also, since the method of preparing a positive electrode material of the present invention forms the coating layer through dry mixing, separate equipment for forming the coating layer is not required and a process of forming the coating layer is not only simple, but problems, such as a decrease in initial discharge capacity and an increase in resistance of the positive electrode material, which occur when using wet coating, may also be minimized.

A secondary battery, in which the positive electrode material of the present invention as described above is used, has better initial capacity characteristics, resistance characteristics, and high-temperature life characteristics than a conventional secondary battery.

## BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.

FIG. 1 is a view schematically illustrating a shape of a positive electrode material according to an example of the present invention;
FIG. 2 is scanning electron microscope (SEM) images of positive electrode material powder prepared according to Example 1 of the present invention;
FIG. 3 is SEM images of positive electrode material powder prepared according to Comparative Example 2 of the present invention; and
FIG. 4 is a view for explaining a structure of a T-jet mixer which may be used in preparation of polyamic acid nanoparticles.

## MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression "average particle diameter ($D_{50}$)" is defined as a particle diameter based on 50% in a volume cumulative particle size distribution, and is measured by using a laser diffraction method. Specifically, after target particles are dispersed in a dispersion medium, the dispersion medium is introduced into a commercial laser diffraction particle size measurement instrument (e.g., Horiba Partica LA-960) and the average particle diameter ($D_{50}$) based on 50% in a cumulative particle volume distribution according to a particle diameter measured from scattered light may be calculated.

Also, in the present invention, a degree of dispersion (span) of polyamic acid particles was calculated by the following equation from particle diameters at 10%, 50%, and 90% of the cumulative particle volume distribution.

$$Span = (D_{90}-D_{10})/D_{50}$$

Hereinafter, the present invention will be described in detail.

1. Positive Electrode Material

First, a positive electrode material according to the present invention will be described.

The positive electrode material according to the present invention includes a positive electrode active material; and a coating layer formed on a surface of the positive electrode active material, wherein the coating layer has a form in which polyimide is dispersed and distributed in an island shape, and wherein a formation area of the coating layer is in a range of 2% to 80% based on a total surface area of the positive electrode active material. In this case, the expression "island shape" denotes a form in which the polyimide is discontinuously spaced apart and distributed like islands, wherein the shape of each of the islands spaced apart from each other is not particularly limited, but each island may have a variety of shapes such as spherical, cylindrical, polygonal, hemispherical, elliptical, and irregular shapes.

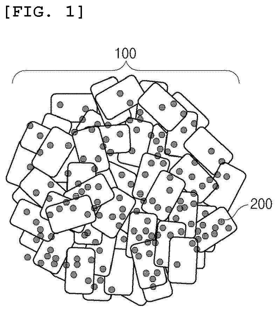

A shape of the positive electrode material according to an example of the present invention was illustrated in FIG. 1. Referring to FIG. 1, the positive electrode material according to the example of the present invention has a form in which polyimide is dispersed and distributed in an island shape 200 on a surface of a positive electrode active material 100.

A size of the island is not limited, but may be in a range of 1 um or less, particularly 1 nm to 800 nm, and more particularly 5 nm to 500 nm. In a case in which the size of the island is excessively large, initial resistance may be excessively increased due to excessive blocking of the surface of the positive electrode active material, and, in a case in which the size of the island is excessively small, an effect of forming the coating layer on the surface of the positive electrode active material is insufficient. Thus, in a case in which the size of the above range is satisfied, the increase in the initial resistance may be minimized while exhibiting the effect of forming the coating layer. When the coating layer, in which polyimide is dispersed in an island shape, is formed on the surface of the positive electrode active material as described above, since a side reaction between the positive electrode active material and an electrolyte solution is suppressed by the polyimide and a problem of reducing lithium mobility, which occurs in the film-type polyimide coating layer, may be minimized, excellent capacity characteristics and electrochemical characteristics may be achieved even under high temperature/high voltage conditions.

In the present invention, a formation area of the polyimide coating layer is in a range of 2% to 80%, preferably 5% to 60%, and more preferably 15% to 40% based on a total surface area of the positive electrode active material. In a case in which the formation area of the polyimide coating layer is smaller than the above range, an effect of preventing a contact with the electrolyte solution is insignificant, and, in a case in which the formation area of the polyimide coating layer is greater than the above range, electrical conductivity and/or lithium mobility may be reduced to cause battery performance degradation.

Also, the polyimide may be included in an amount of 0.03 wt% to 3 wt%, particularly 0.06 wt% to 2 wt%, and more particularly 0.2 wt% to 1 wt% based on a total weight of the positive electrode material. In a case in which the weight of the polyimide is greater than the above range, since an amount of the islands of the polyimide is excessively large, the coating layer is formed in an excessively wide range of the positive electrode active material to severely increase the initial resistance, and, in a case in which the weight of the polyimide is less than the above range, since the amount of the islands of the polyimide is excessively small, the coating layer is formed only in a very small range of the positive electrode active material, and thus, the coating effect may be insufficient.

The coating layer may further include an additional coating element in addition to the polyimide, if necessary, in order to further improve physical properties such as resistance characteristics and charge/discharge efficiency characteristics. The additional coating element, for example, may include at least one selected from the group consisting of aluminum (Al), titanium (Ti), tungsten (W), boron (B), fluorine (F), phosphorus (P), magnesium (Mg), iron (Fe), chromium (Cr), vanadium (V), copper (Cu), calcium (Ca), zinc (Zn), zirconium (Zr), niobium (Nb), molybdenum (Mo), strontium (Sr), antimony (Sb), bismuth (Bi), silicon (Si), and sulfur (S), and may specifically include at least one selected from the group consisting of Al, Ti, W, and B.

The additional coating element may be included in an amount of 100 ppm to 50,000 ppm, for example, 200 ppm to 10,000 ppm based on the total weight of the positive electrode material. In a case in which the additional coating element is included in an amount within the above range, the side reaction with the electrolyte solution may be more effectively suppressed, and electrochemical properties may be further improved.

Next, the positive electrode active material may be a commonly used positive electrode active material. Specifically, the positive electrode active material may include lithium cobalt oxide ($LiCoO_2$), lithium nickel oxide ($LiNiO_2$), $Li[Ni_xCo_yMn_vM_v]O_2$ (where M is at least one element selected from the group consisting of Al, gallium (Ga), and indium (In); $0.3 \le x < 0.1$, $0 \le y$, $z \le 0.5$, $0 \le v \le 0.1$, and $x+y+z+v=1$), a layered compound, such as $Li(Li_aM_{b-a-b}M'_{b'}) O_{2-c}A_c$ (where $0 \le a \le 0.2$, $0.6 \le b \le 1$, $0 \le b' \le 0.2$, $0 \le c \le 0.2$; M includes manganese (Mn) and at least one selected from the group consisting of nickel (Ni), cobalt (Co), Fe, Cr, V, Cu, Zn, and Ti; M' is at least one selected from the group consisting of Al, Mg, and B, and A is at least one selected from the group consisting of P, F, S, and nitrogen (N)), or a compound substituted with at least one transition metal; lithium manganese oxides such as $Li_{1+y}Mn_{2-y}O_4$ (where y is 0 to 0.33), $LiMnO_3$, $LiMn_2O_3$, and $LiMnO_2$; lithium copper oxide ($Li_2CuO_2$); vanadium oxides such as $LiV_3O_8$, $LiFe_3O_4$, $V_2O_5$, and $Cu_2V_2O_7$; Ni-site type lithium nickel oxide represented by the chemical formula $LiNi_{1-y}M_yO_2$ (where M = Co, Mn, Al, Cu, Fe, Mg, B, or Ga, and y is 0.01 to 0.3); lithium manganese composite oxide represented by the chemical formula $LiMn_{2-y}M_yO_2$ (where M = Co, Ni, Fe, Cr, Zn, or tantalum (Ta), and y is 0.01 to 0.1) or $Li_2Mn_3MO_8$ (where M = Fe, Co, Ni, Cu, or Zn); $LiMn_2O_4$ having a part of lithium (Li) being substituted with alkaline earth metal ions; a disulfide compound; $Fe_2(MoO_4)_3$, but the positive electrode active material is not limited thereto.

Preferably, the positive electrode active material may be a lithium composite transition metal oxide represented by [Formula 1] below.

$$[\text{Formula 1}] \qquad Li_x[Ni_yCo_zMn_wM^1_v]O_{2-p}A_p$$

In [Formula 1], $M^1$ is a doping element substituted for transition metal sites and may include at least one element selected from the group consisting of W, Cu, Fe, V, Cr, Ti, Zr, Zn, Al, Ta, yttrium (Y), In, lanthanum (La), Sr, Ga, scandium (Sc), gadolinium (Gd), samarium (Sm), calcium (Ca), cerium (Ce), Nb, Mg, B, and Mo.

A is an element substituted for oxygen sites, wherein A may include at least one element selected from the group consisting of F, chlorine (Cl), bromine (Br), iodine (I), astatine (At), and S.

x represents an atomic ratio of lithium to total transition metals in the lithium composite transition metal oxide, wherein x may be in a range of 1 to 1.3, preferably greater than 1 to 1.30 or less, more preferably 1.005 to 1.30, and most preferably 1.01 to 1.20.

y represents an atomic ratio of nickel among transition metals in the lithium composite transition metal oxide, wherein y may be in a range of 0.3 or more to less than 1, preferably 0.5 or more to less than 1, and more preferably 0.5 to 0.95. Since the higher the amount of the nickel among the transition metals is, the higher the capacity may be achieved, the atomic ratio of the nickel of 0.5 or more is more advantageous for achieving high capacity. However, thermal stability of the positive electrode active material may be reduced as the amount of the nickel is increased, and the transition metal may be dissolved by the contact with the electrolyte solution. However, in a case in which the island-shaped coating layer, in which the polyimide is dispersed, is included on the surface of the positive electrode active material as in the present invention, since the electrolyte solution and the positive electrode active material are effectively blocked by the coating layer, excellent stability may be achieved even in a positive electrode active material having a high nickel content.

z represents an atomic ratio of cobalt among transition metals in the lithium composite transition metal oxide, wherein z may be in a range of greater than 0 to 0.6 or less, preferably greater than 0 to less than 0.4, and more preferably 0.01 to 0.4.

w represents a manganese atomic ratio among transition metals in the lithium composite transition metal oxide, wherein w may be in a range of greater than 0 to 0.6 or less, preferably greater than 0 to less than 0.4, and more preferably 0.01 to 0.4.

v represents an atomic ratio of the doping element $M^1$ doped in the transition metal sites in the lithium composite transition metal oxide, wherein v may be in a range of 0 to 0.2, for example, 0 to 0.1. When the doping element $M^1$ is added, there is an effect of improving structural stability of the lithium nickel cobalt manganese-based oxide, but, since capacity may be reduced as the amount of the doping element is increased, it is desirable that the doping element is included at a ratio of 0.2 or less.

p represents an atomic ratio of the element A substituted for the oxygen sites, wherein p may be in a range of 0 to 0.2, for example, 0 to 0.1.

In Formula 1, $y+z+w+v=1$.

The positive electrode material may be used as a positive electrode active material in a positive electrode of an electrochemical device. The electrochemical device may specifically be a battery or a capacitor, and may more specifically be a lithium secondary battery.

The lithium secondary battery specifically includes a positive electrode, a negative electrode disposed to face the positive electrode, a separator disposed between the positive electrode and the negative electrode, and an electrolyte. Also, the lithium secondary battery may further selectively include a battery container accommodating an electrode assembly of the positive electrode, the negative electrode, and the separator, and a sealing member sealing the battery container.

## 2. Method of Preparing Positive Electrode Material

Next, a method of preparing a positive electrode material according to the present invention will be described.
The method of preparing a positive electrode material according to the present invention includes the steps of: (1) preparing polyamic acid nanopowder having an average particle diameter ($D_{50}$) of 1 um or less; (2) attaching the polyamic acid powder to a positive electrode active material by dry mixing the polyamic acid nanopowder and the positive electrode active material; and (3) heat treating the positive electrode active material having the polyamic acid nanopowder attached thereto to convert the polyamic acid powder to polyimide.

### (1) Preparing Polyamic Acid Nanopowder

First, polyamic acid nanopowder, as a precursor of polyimide, is prepared. In this case, the polyamic acid nanopowder may have an average particle diameter ($D_{50}$) of 1 um or less, preferably 1 nm to 800 nm, and more preferably 5 nm to 500 nm. In a case in which polyamic acid nanoparticles having the above-described average particle diameter are used as a coating raw material, the coating material may be uniformly distributed on the positive electrode active material even in a case where a coating layer is formed by dry mixing.
The polyamic acid nanoparticles having the above-described average particle diameter may be prepared through an impingement mixing process.
The impingement mixing process is a process of preparing polymer nanopowder by rapidly mixing and spraying two solvents having different dissolving powers for a solute, wherein, specifically, it is a method of forming particles by impingement mixing by high-speed spraying of a solution containing a solute and a good solvent having high dissolving power for the solute (referred to as a first solution for convenience) and a solution containing a non-solvent, in which the solute is not dissolved (referred to as a second solution for convenience), in different directions.
The solute in the present invention is a polyamic acid, and the polyamic acid may be included in a concentration of 0.1 wt% to 20 wt%, for example, 0.5 wt% to 10 wt%. In a case in which the concentration of the polyamic acid satisfies the above range, the high-speed spraying and the particle formation may be performed smoothly.
The good solvent is a solvent having high dissolving power for the polyamic acid, wherein an appropriate solvent may be selected and used according to a type of a polymer or polymer precursor used. For example, the good solvent may include at least one selected from the group consisting of N-methyl pyrrolidone, dimethylformamide, dimethyl sulfoxide, tetrahydrofuran, acetone, ethylacetate, acetonitrile, and acetic acid.
The non-solvent denotes a solvent in which the polyamic acid is not dissolved or solubility of the polyamic acid is extremely low, wherein, for example, the non-solvent may include at least one selected from the group consisting of water, alcohol-based solvents such as isopropyl alcohol, methanol, ethanol, and butanol, hydrocarbon-based solvents such as hexane and cyclohexane, and benzene-based solvents such as toluene and xylene.
Conventionally, as a technique for preparing polyamic acid particles, an immersion method and a spray method have been mainly used. The immersion method among them is a method of forming polyamic acid particles through solvent substitution between a non-solvent and a good solvent by adding the non-solvent to a reactor, stirring, and dropping a polymer solution, in which polyamic acid is dissolved in the good solvent, to the non-solvent. The method of preparing polyamic acid particles by the immersion method is advantageous in that the process is simple and economical, but has a limitation in that micron-sized particles are formed and it difficult to control a particle shape and a particle size distribution due to the occurrence of aggregation during the preparation of the particles. The spray method is a method of forming particles by heating and drying a polymer solution containing polyamic acid at the same time as spraying, wherein it is advantageous in that an amount of a solvent used is small and it may form smaller particles than those of the immersion method, but has a limitation in that it is difficult to reduce the particle size to a nano-size, there is a risk of explosion of the organic solvent because a heating process must be accompanied, and the polyamic acid may be deteriorated by the heating.
In contrast, with respect to the impingement mixing process, solvent exchange occurs between the good solvent and the non-solvent when the first solution and the second solution are mixed, and polyamic acid particles are formed as nuclei grow, wherein, since a reaction volume is small because the mixing is performed by an impingement mixing method through high-speed injection in a microreactor, small nano-sized particles are formed and mixing efficiency may be increased, and thus, a particle size also has a relatively uniform distribution. Also, with respect to the impingement mixing process, since the solvent is removed without a separate heating process, polymer powder may be prepared without chemical or physical alteration.

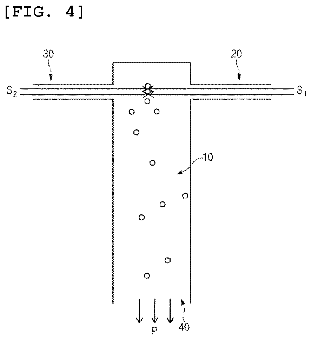

The impingement mixing process as described above, for example, may be performed using an impingement mixer such as a T-jet mixer. A diagram for explaining a configuration of the T-jet mixer is illustrated in FIG. 4. As illustrated in FIG. 4, the T-jet mixer includes a reaction chamber 10, two supply units 20 and 30 respectively positioned on both sides of the reaction chamber 10 to supply raw materials S1 and S2, and a discharge unit 40 located at a lower end of the reaction chamber 10 and discharging a reaction product P.

The first solution S1 containing a polyamic acid and a good solvent is sprayed at a high speed into the reaction chamber 10 through one 20 of the two supply units, and the second solution S2 containing a non-solvent is sprayed at a high speed into the reaction chamber 10 through the other supply unit 30. The first solution S1 and second solution S2 spayed at a high speed are impingement mixed in the reaction chamber 10 and the polyamic acid powder P is formed through solvent exchange. The formed polyamic acid powder P is discharged through the discharge unit 40 at a bottom of the reaction chamber 10.

The polyamic acid nanopowder according to the present invention prepared by the above-described method may have an average particle diameter ($D_{50}$) of 1 $\mu$m or less, particularly 1 nm to 800 nm, and more particularly 5 nm to 500 nm. The polyamic acid nanopowder has an average particle diameter ($D_{50}$) in the above range, wherein it is distinguished from microparticles having an average particle diameter ($D_{50}$) of 1 um or more as described above.

Also, the polyamic acid nanopowder has a uniform size, wherein a degree of dispersion (span value) may be in a range of 2.0 or less, particularly 0.5 to 2.0, and more particularly 0.8 to 1.5.

If the polyamic acid nanopowder having a small particle size and high particle size uniformity is used, a uniform coating layer may be formed even when a dry coating method is used, unlike a case of using micro-sized polyamic acid particles, and, accordingly, a positive electrode material having excellent resistance characteristics and capacity characteristics may be prepared.

### (2) Attaching the Polyamic Acid Powder

Next, the polyamic acid nanopowder formed through step (1) and a positive electrode active material are dry-mixed to attach the polyamic acid powder on a surface of the positive electrode active material.

The dry mixing denotes mixing without using a solvent, wherein the dry mixing may be performed using a mixing method well known in the art, such as ball milling, jet milling, pin mill, sieving, stir mixing, impact mixing, and acoustic mixing.

The polyamic acid nanopowder and the positive electrode active material may be dry-mixed in a weight ratio of 0.03:99.97 to 3:97, particularly 0.06:99.94 to 2:98, and more particularly 0.2:99.8 to 1:99. In a case in which the weight ratio of the polyamic acid nanopowder to the positive electrode active material satisfies the above range, since the polyimide coating layer may be formed to have an appropriate area range as described above on the surface of the positive electrode active material, the side reaction with the electrolyte solution may be reduced by suppressing the contact with the electrolyte solution without an excessive increase in the initial resistance.

Also, in order to further improve physical properties such as resistance characteristics and charge/discharge efficiency characteristics, an additional coating raw material may be further mixed with the polyamic acid nanopowder, if necessary. For example, after the polyamic acid nanopowder, the additional coating raw material, and the positive electrode active material are dry-mixed to attach the polyamic acid powder and coating raw material on the positive electrode active material, the positive electrode material according to the example of the present invention may be prepared by performing a heat treatment.

The additional coating raw material, for example, may include oxide, hydroxide, oxyhydroxide, carbonate, sulfate, halide, sulfide, acetate, carboxylate, or a combination thereof, which includes at least one element selected from the group consisting of Al, Ti, W, B, F, P, Mg, Fe, Cr, V, Cu, Ca, Zn, Zr, Nb, Mo, Sr, Sb, Bi, Si, and S, and the additional coating raw material may specifically include $ZnO$, $Al_2O_3$, $Al(OH)_3$, $AlSO_4$, $AlCl_3$, Al-isopropoxide, $AlNO_3$, $TiO_2$, $WO_3$, $AlF$, $H_2BO_3$, $HBO_2$, $H_3BO_3$, $H_2B_4O_7$, $B_2O_3$, $C_6H_5B(OH)_2$, $(C_6H_5O)_3B$, $[(CH_3(CH_2)_3O)_3B$, $C_3H_9B_3O_6$, $(C_3H_7O_3)B$, $Li_3WO_4$, $(NH_4)_{10}W_{12}O_{41} \cdot 5H_2O$, and $NH_4H_2PO_4$, but the additional coating raw material is not limited thereto.

The additional coating raw material may be used in an amount such that the coating element is included in a concentration of 100 ppm to 50,000 ppm, for example, 200 ppm to 10,000 ppm based on an amount of moles of total metals in the positive electrode material. In a case in which the additional coating element is included in a concentration within the above range, the side reaction with the electrolyte solution may be more effectively suppressed, and the electrochemical properties may be further improved.

### (3) Heat Treating

Next, the positive electrode active material having the polyamic acid nanopowder attached on the surface thereof is heat-treated. The heat treatment is to convert the polyamic acid particles to polyimide and form a coating layer by bonding the polyimide with the surface of the positive electrode active material.

The heat treatment may be performed at a temperature of 100°C to 700°C, particularly 120°C to 600°C, and more particularly 200°C to 500°C. If the heat treatment temperature is excessively low, the conversion to the polyimide may occur incompletely or the coating layer may be exfoliated from the positive electrode active material due to a weak binding force with the surface of the positive electrode active material, and, if the heat treatment temperature is excessively high, it may cause a change in crystal structure of the positive electrode active material and may adversely affect lifetime and resistance of the positive electrode active material by changing an amount of residual lithium.

Hereinafter, examples of the present invention will be described in detail in such a manner that it may easily be carried out by a person with ordinary skill in the art to which the present invention pertains.

## Example 1

A polymer solution (first solution) was prepared by dissolving a polyamic acid at 1 wt% in a mixed solvent in which N-methyl pyrrolidone and tetrahydrofuran were mixed in a weight ratio of 3:97, and distilled water was prepared as a non-solvent (second solution).

After fabricating a T-jet mixer having the structure of FIG. 4, the first solution and the second solution were sprayed at a high speed by using the T-jet mixer to prepare polyamic acid powder. In this case, spraying speeds of the first solution and the second solution were 50 mL/min, respectively, and a nozzle having an inner diameter of 1/16 inch was used. The sprayed mixed solution was again stirred in 10 times volume of distilled water and only particles were then obtained through a centrifuge. The obtained particles were dried in air at room temperature.

An average particle diameter and a degree of dispersion of the polyamic acid powder prepared as described above were measured using a laser diffraction particle size measurement instrument (Horiba Partica LA-960). As a result of the measurement, the average particle diameter of the polyamic acid powder was 204 nm, and the degree of dispersion (Span = $(D_{90}-D_{10})/D_{50}$) was 1.08.

Next, the polyamic acid powder and $Li(Ni_{0.8}Co_{0.1}Mn_{0.1})O_2$, as a positive electrode active material, were dry-mixed in a weight ratio of 0.5:99.5 and then heat-treated at 300°C to prepare positive electrode material powder on which a coating layer containing 0.5 wt% of polyimide was formed.

The positive electrode material powder prepared as described above, a conductive agent (carbon black, FX35, manufactured by DENKA COMPANY LIMITED), and a binder (PVdF, KF9700, manufactured by KUREHA CORPORATION) were mixed in a weight ratio of 97.5:1.0:1.5 to prepare a positive electrode material mixture. A 20 um thick aluminum current collector (manufactured by Sam-A Aluminum Co., Ltd.) was coated with the positive electrode material mixture, dried at 80°C, and then rolled to prepare a positive electrode.

Next, a negative electrode active material (artificial graphite:natural graphite=9:1 weight ratio), a conductive agent (carbon Black, SuperC65), and a binder (PVdF, KF9700) were mixed in an N-methylpyrrolidone solvent in a weight ratio of 96:3:1 to prepare a negative electrode material mixture. A 10 um thick copper current collector was coated with the prepared negative electrode material mixture, dried at 80°C, and then rolled to prepare a negative electrode.

A separator was disposed between the positive electrode and negative electrode prepared as described above, and an electrolyte solution was injected to prepare a lithium secondary battery.

## Example 2

Positive electrode material powder, on which a coating layer containing 1 wt% of polyimide was formed, was prepared in the same manner as in Example 1 except that the polyamic acid powder and the positive electrode active material were dry-mixed in a weight ratio of 1:99.

Also, a positive electrode, a negative electrode, and a lithium secondary battery were prepared in the same manner as in Example 1 except that the above positive electrode material powder was used.

## Example 3

Positive electrode material powder, on which a coating layer containing 0.25 wt% of polyimide was formed, was prepared in the same manner as in Example 1 except that the polyamic acid powder and the positive electrode active material were dry-mixed in a weight ratio of 0.25:99.75.

Also, a positive electrode, a negative electrode, and a lithium secondary battery were prepared in the same manner as in Example 1 except that the above positive electrode material powder was used.

## Example 4

Positive electrode material powder, on which a coating layer was formed, was prepared in the same manner as in Example 1 except that boric acid was additionally added so that a molar ratio of boron (B) was 1,000 ppm based on a total weight of the positive electrode material when the polyamic acid powder and the positive electrode active material were dry-mixed.

Also, a positive electrode, a negative electrode, and a lithium secondary battery were prepared in the same manner as in Example 1 except that the above positive electrode material powder was used.

**Example 5**

Positive electrode material powder, on which a coating layer was formed, was prepared in the same manner as in Example 2 except that boric acid was additionally added so that a molar ratio of B was 1,000 ppm based on a total weight of the positive electrode material when the polyamic acid powder and the positive electrode active material were dry-mixed.

Also, a positive electrode, a negative electrode, and a lithium secondary battery were prepared in the same manner as in Example 1 except that the above positive electrode material powder was used.

**Example 6**

Positive electrode material powder, on which a coating layer was formed, was prepared in the same manner as in Example 3 except that boric acid was additionally added so that a molar ratio of B was 1,000 ppm based on a total weight of the positive electrode material when the polyamic acid powder and the positive electrode active material were dry-mixed.

Also, a positive electrode, a negative electrode, and a lithium secondary battery were prepared in the same manner as in Example 1 except that the above positive electrode material powder was used.

**Comparative Example 1**

A positive electrode, a negative electrode, and a lithium secondary battery were prepared in the same manner as in Example 1 except that a $Li(Ni_{0.8}Co_{0.1}Mn_{0.1})O_2$ positive electrode active material with no coating layer formed thereon was used as a positive electrode material.

**Comparative Example 2**

A polymer solution was prepared by dissolving a polyamic acid at 0.5 wt% in an N-methyl pyrrolidone (NMP) solvent. Next, the polyamic acid solution and a $Li(Ni_{0.8}Co_{0.1}Mn_{0.1})O_2$ positive electrode active material were wet-mixed with a shaker in a weight ratio of 1:1, then filtered, and dried with nitrogen to obtain a positive electrode active material wet-coated with the polyamic acid. The positive electrode active material thus obtained was heat-treated at 300°C to prepare positive electrode material powder on which a coating layer containing 0.5 wt% of polyimide was formed.

A positive electrode, a negative electrode, and a lithium secondary battery were prepared in the same manner as in Example 1 except that the above positive electrode material powder was used.

**Experimental Example 1**

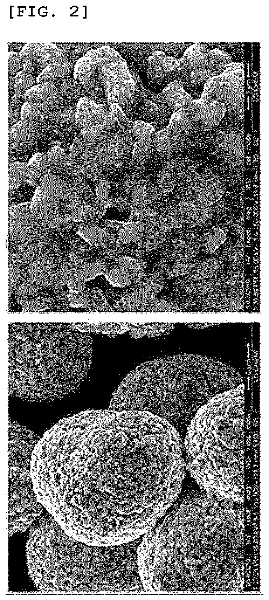

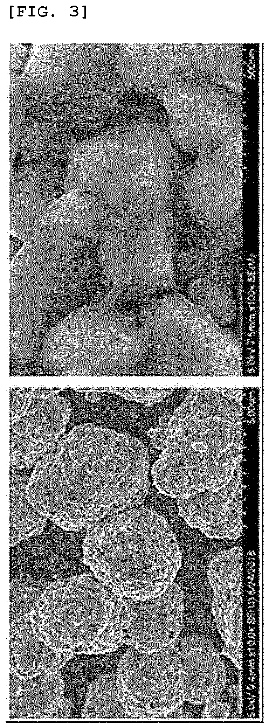

The positive electrode material powders prepared by Example 1 and Comparative Example 2 were photographed with a scanning electron microscope (SEM) to observe surface state and powder shape. SEM images of the positive electrode material powders prepared by Example 1 and Comparative Example 2 are illustrated in FIG. 2 and FIG. 3, respectively.

Referring to FIG. 2, with respect to the positive electrode material prepared in Example 1, it may be confirmed that translucent island-shaped polyimide particles were present between primary particles constituting a secondary particle of the positive electrode active material.

In contrast, referring to FIG. 3, with respect to the positive electrode material prepared by Comparative Example 2, it may be confirmed that a polyimide layer entirely covered primary particles constituting a secondary particle of the positive electrode active material.

**Experimental Example 2 - Coating Layer Formation Area**

Coating layer formation areas of the positive electrode material powders prepared in Examples 1 to 3 were measured by the following method, and measurement results are presented in the following Table 1.

First, a weight (a) of one positive electrode active material particle and a surface area (b) of one positive electrode active material particle were calculated based on an average diameter and density of the positive electrode active material used. Also, a weight (c) of one polyamic acid nanoparticle and an average cross-sectional area (d) of polyamic acid were calculated based on an average diameter and density of the polyamic acid. Then, the number (e) of positive electrode active material particles was obtained by dividing a total weight (A) of the positive electrode active material used in Examples 1 to 3 by the weight (a) of one positive electrode active material particle, and the number (f) of polyamic acid particles was obtained by dividing a total weight (B) of the polyamic acid used in Examples 1 to 3 by the weight (c) of one polyamic acid nanoparticle. Next, the number (g) of polyamic acid nanoparticles attached for one positive electrode active material particle was obtained by dividing the number (f) of polyamic acid particles by the number (e) of positive electrode active material particles, and, as described in the following Equation (1), a coating layer formation area was calculated by dividing a value, which was obtained by multiplying the number (g) of polyamic acid nanoparticles attached for one positive electrode active material particle by the average cross-sectional area (d) of polyamic acid nanoparticles, by the surface area (b) of the positive electrode active material particles and multiplying 100.

```
Equation (1): Coating layer formation area (%) =
{(the number (g) of polyamic acid particles attached for one
positive electrode active material particle × average cross-
sectional area (d) of polyamic acid particles)/surface area
(b) of positive electrode active material} × 100
```

[Table 1]

|  | Coating layer formation area (%) |
| --- | --- |
| Example 1 | 21.7 |
| Example 2 | 43.5 |
| Example 3 | 10.9 |

**Experimental Example 3 - Charge/Discharge Efficiency and Initial Resistance Characteristics**

The lithium secondary batteries prepared in Examples 1 to 6 and Comparative Example 2 were charged at a constant current (CC) of 0.2 C to a voltage of 4.25 V at 25°C, and were subsequently charged at a constant voltage (CV) until a charge current became 0.05 C (cut-off current), and charge capacity was measured. Thereafter, after the lithium secondary batteries were left standing for 20 minutes, the lithium secondary batteries were discharged at a constant current (CC) of 0.2 C to a voltage of 2.5 V and discharge capacity was measured to measure charge/discharge efficiency. Also, in a fully charged state, initial resistance (1st DCR) was measured by dividing a change in voltage to 60 seconds of initial discharge by the current.

Measurement results are presented in Table 2 below.

[Table 2]

|  | Charge capacity (0.2C) | Discharge capacity (0.2C) | Charge/discharge efficiency (%) | 25°C 1st DCR (0.2 C) |
| --- | --- | --- | --- | --- |
| Example 1 | 222.1 | 187.7 | 84.5 | 30.4 |
| Example 2 | 226.4 | 186.7 | 82.5 | 37.9 |
| Example 3 | 226.3 | 192.7 | 85.2 | 25.4 |
| Example 4 | 223.8 | 191.5 | 85.6 | 26.9 |
| Example 5 | 226.5 | 189.8 | 83.8 | 34.2 |
| Example 6 | 226.2 | 194.6 | 86.0 | 24.5 |

(continued)

|  | Charge capacity (0.2C) | Discharge capacity (0.2C) | Charge/discharge efficiency (%) | 25°C 1st DCR (0.2 C) |
|---|---|---|---|---|
| Comparative Example 2 | 219.8 | 183.1 | 83.3 | 42.6 |

Referring to Table 2, the lithium secondary batteries prepared in Examples 1 to 6 exhibited lower initial resistance while exhibiting equal or better charge/discharge efficiency than the lithium secondary battery of Comparative Example 2.

**Experimental Example 4 - High-temperature Life Characteristics**

Each of the lithium secondary batteries of Examples 1 to 6 and Comparative Examples 1 and 2 was charged at a constant current (CC) of 0.1 C to a voltage of 4.25 V at 25°C, and thereafter, charge in the first cycle was performed by charging each lithium secondary battery at a constant voltage (CV) to a charge current of 0.05 C (cut-off current). Thereafter, after each lithium secondary battery was left standing for 20 minutes, each lithium secondary battery was discharged at a constant current (CC) of 0.1 C to a voltage of 2.5 V. Thereafter, capacity retention was evaluated by repeating charge and discharge at 0.3 C up to 30 cycles at 45°C to calculate capacity of the last cycle relative to capacity of the first cycle and presented in Table 3 below.

[Table 3]

|  | 45°C, capacity after 30 cycles (%) |
|---|---|
| Example 1 | 96.9 |
| Example 2 | 97.2 |
| Example 3 | 95.9 |
| Example 4 | 96.2 |
| Example 5 | 98.0 |
| Example 6 | 95.4 |
| Comparative Example 1 | 94.7 |
| Comparative Example 2 | 94.1 |

Referring to Table 3, since each of the lithium secondary batteries prepared in Examples 1 to 6 exhibited a higher capacity retention than the lithium secondary batteries of Comparative Examples 1 and 2 even after 30 cycles at 45°C, it may be confirmed that high-temperature life characteristics were excellent.

**Experimental Example 5 - Thermal Stability Evaluation**

Each of the lithium secondary batteries of Examples 1 and 3 and Comparative Example 1 was charged at a constant current (CC) of 0.2 C to a voltage of 4.25 V for the first cycle, and thereafter, charge in the first cycle was performed by charging each lithium secondary battery at a constant voltage (CV) to a charge current of 0.05 C (cut-off current). After the charged cell was disassembled in a dry room, only the positive electrode was collected. After the collected positive electrode was put in a HP-DSC (High Pressure Differential Scanning Calorimetry) pan and 20 $\mu\ell$ of the electrolyte solution was added, a peak temperature was measured using the DSC (EQC-0277, Setaram) while increasing temperature from 35°C to 600°C at a heating rate of 10°C/min. The results thereof are presented in Table 4 below.

[Table 4]

|  | DSC peak (°C) |
|---|---|
| Example 1 | 226.0 |
| Example 3 | 227.5 |
| Comparative Example 1 | 222.7 |

Referring to Table 4, with respect to the positive electrodes of Examples 1 and 3 using the positive electrode material prepared by the method of the present invention, it may be understood that an exothermic peak occurred at a higher temperature than the positive electrode of Comparative Example 1. This shows that the positive electrode material prepared according to the present invention has excellent thermal stability.

## Claims

1. A positive electrode material comprising:

    a positive electrode active material; and
    a coating layer formed on a surface of the positive electrode active material,
    wherein the coating layer has a form in which polyimide is dispersed and distributed in an island shape,
    **characterized in that** a formation area of the coating layer is in a range of 2% to 80% based on a total surface area of the positive electrode active material, wherein the formation area of the coating layer is determined according to Experimental Example 2 of the description.

2. The positive electrode material of claim 1, wherein the polyimide is included in an amount of 0.03 wt% to 3 wt% based on a total weight of the positive electrode material.

3. The positive electrode material of claim 1, wherein the coating layer further comprises at least one coating element selected from the group consisting of Al, Ti, W, B, F, P, Mg, Fe, Cr, V, Cu, Ca, Zn, Zr, Nb, Mo, Sr, Sb, Bi, Si, and S.

4. The positive electrode material of claim 1, wherein the positive electrode active material is represented by Formula 1.

    [Formula 1] $\qquad Li_x[Ni_yCo_zMn_wM_v]O_{2-p}A_p$

    wherein, in [Formula 1], M comprises at least one element selected from the group consisting of W, Cu, Fe, V, Cr, Ti, Zr, Zn, Al, Ta, Y, In, La, Sr, Ga, Sc, Gd, Sm, Ca, Ce, Nb, Mg, B, and Mo,
    A comprises at least one element selected from the group consisting of F, Cl, Br, I, At, and S, and
    $1.0 \leq x \leq 1.30$, $0.3 \leq y < 1$, $0 < z \leq 0.6$, $0 < w \leq 0.6$, $0 \leq v \leq 0.2$, and $0 \leq p \leq 0.2$.

5. The positive electrode material of claim 6, wherein, in Formula 1, $0.5 \leq y < 1$, $0 < z < 0.4$, and $0 < w < 0.4$.

6. A method of preparing a positive electrode material, the method comprising:

    preparing polyamic acid nanopowder having an average particle diameter ($D_{50}$) of 1 $\mu$m or less, wherein the expression "average particle diameter ($D_{50}$)" is defined as a particle diameter based on 50% in a volume cumulative particle size distribution as measured by a laser diffraction method;
    attaching the polyamic acid powder to a positive electrode active material by dry mixing the polyamic acid nanopowder and the positive electrode active material; and
    heat treating the positive electrode active material having the polyamic acid nanopowder attached thereto to convert the polyamic acid powder to polyimide.

7. The method of claim 6, wherein the polyamic acid nanopowder has an average particle diameter (D50) of 1 nm to 800 nm.

8. The method of claim 6, wherein the polyamic acid nanopowder has a degree of dispersion (span value) of 2.0 or less.

9. The method of claim 6, wherein the polyamic acid nanopowder and the positive electrode active material are dry-mixed in a weight ratio of 0.03:99.97 to 3:97.

10. The method of claim 6, wherein the heat treatment is performed at a temperature of 100°C to 700°C.

11. The method of claim 6, wherein the preparing of the polyamic acid nanopowder is preformed using an impingement mixing process.

12. The method of claim 6, wherein a coating raw material containing at least one coating element selected from the group consisting of Al, Ti, W, B, F, P, Mg, Fe, Cr, V, Cu, Ca, Zn, Zr, Nb, Mo, Sr, Sb, Bi, Si, and S is mixed together during the dry mixing of the polyamic acid nanopowder and the positive electrode active material.

13. A positive electrode for a lithium secondary battery, the positive electrode comprising the positive electrode material of claim 1.

14. A lithium secondary battery comprising the positive electrode of claim 13.

**Patentansprüche**

1. Positivelektrodenmaterial, umfassend:

   ein Positivelektrodenaktivmaterial; und
   eine Überzugsschicht, die auf einer Oberfläche des Positivelektrodenaktivmaterials ausgebildet ist,
   wobei die Überzugsschicht eine Form aufweist, in der Polyimid dispergiert und in einer Inselform verteilt ist, **dadurch gekennzeichnet, dass** eine Ausbildungsfläche der Überzugsschicht in einem Bereich von 2 % bis 80 %, bezogen auf eine Gesamtoberfläche des Positivelektrodenaktivmaterials, liegt, wobei die Ausbildungsfläche der Überzugsschicht gemäß Experimentalbeispiel 2 der Beschreibung bestimmt wird.

2. Positivelektrodenmaterial nach Anspruch 1, wobei das Polyimid in einer Menge von 0,03 Gew.-% bis 3 Gew.-%, bezogen auf das Gesamtgewicht des Positivelektrodenmaterials, eingeschlossen ist.

3. Positivelektrodenmaterial nach Anspruch 1, wobei die Überzugsschicht ferner mindestens ein Beschichtungselement umfasst, ausgewählt aus der Gruppe bestehend aus Al, Ti, W, B, F, P, Mg, Fe, Cr, V, Cu, Ca, Zn, Zr, Nb, Mo, Sr, Sb, Bi, Si und S.

4. Positivelektrodenmaterial nach Anspruch 1, wobei das Positivelektrodenaktivmaterial durch Formel 1 dargestellt ist:

   [Formel 1] $\qquad$ $Li_x[Ni_yCo_zMn_wM_v]O_{2-p}A_p$

   worin, in [Formel 1], M mindestens ein Element umfasst, ausgewählt aus der Gruppe bestehend aus W, Cu, Fe, V, Cr, Ti, Zr, Zn, Al, Ta, Y, In, La, Sr, Ga, Sc, Gd, Sm, Ca, Ce, Nb, Mg, B und Mo,
   A mindestens ein Element umfasst, ausgewählt aus der Gruppe bestehend aus F, Cl, Br, I, At und S, und
   $1,0 \leq x \leq 1,30$, $0,3 \leq y < 1$, $0 < z \leq 0,6$, $0 < w \leq 0,6$, $0 \leq v \leq 0,2$, und $0 \leq p \leq 0,2$.

5. Positivelektrodenmaterial nach Anspruch 6, worin, in Formel 1, $0,5 \leq y < 1$, $0 < z < 0,4$, und $0 < w < 0,4$.

6. Verfahren zur Herstellung eines Positivelektrodenmaterials, wobei das Verfahren folgendes umfasst:

   Herstellen von Polyamidsäure-Nanopulver mit einem mittleren Partikeldurchmesser ($D_{50}$) von 1 um oder weniger, wobei der Ausdruck "mittlerer Partikeldurchmesser ($D_{50}$)" als ein Partikeldurchmesser auf der Basis von 50% in einer volumenkumulativen Partikelgrößenverteilung, gemessen durch ein Laserbeugungsverfahren, definiert ist;
   Anbringen des Polyamidsäurepulvers an ein Positivelektrodenaktivmaterial durch Trockenmischen des Polyamidsäure-Nanopulvers und des Positivelektrodenaktivmaterials; und
   Wärmebehandlung des Positivelektrodenaktivmaterials, an dem das Polyamidsäure-Nanopulver angebracht ist, um das Polyamidsäurepulver in Polyimid umzuwandeln.

7. Verfahren nach Anspruch 6, bei dem das Polyamidsäure-Nanopulver einen mittleren Teilchendurchmesser ($D_{50}$) von 1 nm bis 800 nm aufweist.

8. Verfahren nach Anspruch 6, bei dem das Polyamidsäure-Nanopulver einen Dispersionsgrad (Span-Wert) von 2,0 oder weniger aufweist.

9. Verfahren nach Anspruch 6, bei dem das Polyamidsäure-Nanopulver und das Positivelektrodenaktivmaterial in einem Gewichtsverhältnis von 0,03:99,97 bis 3:97 trocken gemischt werden.

**10.** Verfahren nach Anspruch 6, bei dem die Wärmebehandlung bei einer Temperatur von 100°C bis 700°C durchgeführt wird.

**11.** Verfahren nach Anspruch 6, bei dem die Herstellung des Polyamidsäure-Nanopulvers unter Verwendung eines Prallmischverfahrens durchgeführt wird.

**12.** Verfahren nach Anspruch 6, bei dem ein Beschichtungsrohmaterial, das mindestens ein Beschichtungselement enthält, ausgewählt aus der Gruppe bestehend aus Al, Ti, W, B, F, P, Mg, Fe, Cr, V, Cu, Ca, Zn, Zr, Nb, Mo, Sr, Sb, Bi, Si und S, während des Trockenmischens des Polyamidsäure-Nanopulvers und des Positivelektrodenaktivmaterials zusammengemischt wird.

**13.** Positive Elektrode für eine Lithium-Sekundärbatterie, wobei die positive Elektrode das Positivelektrodenmaterial nach Anspruch 1 umfasst.

**14.** Lithium-Sekundärbatterie, welche die positive Elektrode nach Anspruch 13 umfasst.

**Revendications**

**1.** Matériau d'électrode positive comprenant :

un matériau actif d'électrode positive ; et
une couche de revêtement formée sur une surface du matériau actif d'électrode positive,
dans lequel la couche de revêtement possède une forme dans laquelle du polyimide est dispersé et réparti sous une géométrie en îlots,
**caractérisé en ce qu'**une aire de formation de la couche de revêtement est dans une plage allant de 2 % à 80 % sur la base d'une aire surfacique totale du matériau actif d'électrode positive, dans lequel l'aire de formation de la couche de revêtement est déterminée selon l'exemple expérimental 2 de la description.

**2.** Matériau d'électrode positive selon la revendication 1, dans lequel le polyimide est compris dans une quantité de 0,03 % en poids à 3 % en poids sur la base d'un poids total du matériau d'électrode positive.

**3.** Matériau d'électrode positive selon la revendication 1, dans lequel la couche de revêtement comprend en outre au moins un élément de revêtement sélectionné parmi le groupe constitué par Al, Ti, W, B, F, P, Mg, Fe, Cr, V, Cu, Ca, Zn, Zr, Nb, Mo, Sr, Sb, Bi, Si, et S.

**4.** Matériau d'électrode positive selon la revendication 1, dans lequel le matériau actif d'électrode positive est représenté par la Formule 1

[Formule 1] $\quad$ $Li_x[Ni_yCo_zMn_wM_v]O_{2-p}A_p$

dans lequel, dans la Formule 1, M comprend au moins un élément sélectionné parmi le groupe constitué par W, Cu, Fe, V, Cr, Ti, Zr, Zn, Al, Ta, Y, In, La, Sr, Ga, Sc, Gd, Sm, Ca, Ce, Nb, Mg, B, et Mo,
A comprend au moins un élément sélectionné parmi le groupe constitué par F, Cl, Br, I, At et S, et
$1,0 \leq x \leq 1,30$, $0,3 \leq y < 1$, $0 < z \leq 0,6$, $0 < w \leq 0,6$, $0 \leq v \leq 0,2$, et $0 \leq p \leq 0,2$.

**5.** Matériau d'électrode positive selon la revendication 6, dans lequel, dans la Formule 1, $0,5 \leq y < 1$, $0 < z < 0,4$, et $0 < w < 0,4$.

**6.** Procédé de préparation d'un matériau d'électrode positive, le procédé comprenant :

la préparation d'une nanopoudre d'acide polyamique ayant un diamètre de particule moyen ($D_{50}$) de 1 $\mu$m ou moins, dans lequel l'expression « diamètre de particule moyen ($D_{50}$) » est définie comme un diamètre de particule basé sur 50 % dans une distribution de taille de particule cumulée en volume telle que mesurée par une méthode de diffraction par laser ;
la fixation de la poudre d'acide polyamique sur un matériau actif d'électrode positive par mélange à sec de la nanopoudre d'acide polyamique et du matériau actif d'électrode positive ; et
le traitement thermique du matériau actif d'électrode positive ayant la nanopoudre d'acide polyamique fixée sur lui afin de convertir la poudre d'acide polyamique en polyimide.

7. Procédé selon la revendication 6, dans lequel la nanopoudre d'acide polyamique possède un diamètre de particule moyen (D50) de 1 nm à 800 nm.

8. Procédé selon la revendication 6, dans lequel la nanopoudre d'acide polyamique possède un degré de dispersion (valeur d'étendue) de 2,0 ou moins.

9. Procédé selon la revendication 6, dans lequel la nanopoudre d'acide polyamique et le matériau actif d'électrode positive sont mélangés à sec selon un rapport en poids allant de 0,03:99,97 à 3:97.

10. Procédé selon la revendication 6, dans lequel le traitement thermique est réalisé à une température de 100 °C à 700 °C.

11. Procédé selon la revendication 6, dans lequel la préparation de la nanopoudre d'acide polyamique est réalisée à l'aide d'un processus de mélange par inertie.

12. Procédé selon la revendication 6, dans lequel une matière première de revêtement contenant au moins un élément de revêtement sélectionné dans le groupe constitué par Al, Ti, W, B, F, P, Mg, Fe, Cr, V, Cu, Ca, Zn, Zr, Nb, Mo, Sr, Sb, Bi, Si, et S est mélangée pendant le mélange à sec de la nanopoudre d'acide polyamique et du matériau actif d'électrode positive.

13. Électrode positive pour une batterie secondaire au lithium, l'électrode positive comprenant le matériau d'électrode positive selon la revendication 1.

14. Batterie secondaire au lithium comprenant l'électrode positive selon la revendication 13.

[FIG. 1]

[FIG. 2]

[FIG. 3]

[FIG. 4]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1105342
- KR 101105342

- KR 20180017724